# FASCICULE DE BREVET EUROPEEN

(11) **EP 1 006 636 B1**
(45) Date de publication et mention de la délivrance du brevet: **28.05.2003**
(21) Numéro de dépôt: 99403003.9
(22) Date de dépôt: 02.12.1999
(51) Int. Cl.: H02G 3/12

(54) **Appareil électrique encastrable dans un support**
Unterputzdose für ein elektrisches Gerät
Flush mounted electrical box

(30) Priorité: 04.12.1998 FR 9815327
(43) Date de publication de la demande: 07.06.2000
(73) Titulaire: P.G.E.P. PROFESSIONAL GENERAL ELECTRONIC PRODUCTS Société Anonyme, 92400 Courbevoie (FR)
(72) Inventeur: Blanchot, Michèle, F-78270 Cravent (FR); Nudelmont, Georgette, F-92200 Neuilly Sur Seine (FR)
(74) Mandataire: Loyer, Bertrand

(56) Documents cités:
- EP-A- 0 844 714
- WO-A-98/38714
- DE-A- 4 116 218
- DE-U- 9 313 599
- GB-A- 2 105 922
- GB-A- 2 106 722
- GB-A- 2 211 365
- GB-A- 2 264 595
- US-A- 5 328 288

## Description

La présente invention concerne d'une manière générale un appareil électrique destiné à être disposé dans un support tel qu'un rail, une goulotte, une armoire, une platine disposée dans un meuble...

Un tel appareil peut être destiné à la distribution d'énergie électrique (courant fort : 230 Volts), porter tous types de fonctions telles que commande, gestion, sécurité, etc., transporter des signaux de communication usuellement nommés courants faibles.

Il est difficile d'évaluer lors de la construction de logements et d'immeubles professionnels, les besoins ultérieurs des occupants. On constate par exemple que les installations électriques d'immeubles existants qu'ils soient à usage privé ou professionnel, disposent généralement d'un nombre insuffisant de prises de courant et de points de connexion au réseau de télécommunication, ou que ceux-ci sont mal positionnés dans les pièces par rapport à l'implantation envisagée lors d'un emménagement.

Lors de la réalisation d'une installation électrique, l'installateur sélectionne les appareils portant les fonctions qui lui sont nécessaires et les dispose dans un support tel qu'un rail, ou goulotte, pouvant par exemple être fixé le long d'un mur à la manière d'une plinthe ou constituer un poteau de distribution électrique, ou une armoire.

Cette constatation est également vraie pour des appareils électriques moins usuels.

Il a d'abord été proposé des appareils électriques, comportant des appareils qui sont reliés électriquement et éventuellement mécaniquement les uns aux autres pour former un ensemble que l'on insère dans un support en forme de rail par une extrémité ouverte de celui-ci et met en place par coulissement dans ce rail.

L'évolution rapide des techniques, la maintenance, la reconfiguration, la redéfinition de câblages, l'adjonction d'appareils de gestion, etc. nécessitent un accès rapide et permanent à tel ou tel appareil hébergé dans un support, rail, poteau, potelet, plinthe, boîtier de dérivation, tableau, armoire de distribution ou de répartition...

Ces aménagements ultérieurs sont difficiles à réaliser sur les appareils introduits par coulissement du fait qu'il est nécessaire de disposer à l'extrémité du rail de la place nécessaire pour les retirer du support. Les interventions telles que l'adaptation de ces ensembles ou réglettes à de nouveaux besoins, l'échange de parafoudres ayant été détruits par la foudre sont alors longues.

C'est pourquoi il a été proposé d'introduire les appareils à travers la face avant ouverte du support. A cet effet, des moyens de fixation destinés à prendre appui sur des parois internes du support ont été disposés sur les appareils. Ces moyens de fixation sont de manière usuelle déplacés entre une position active, pour laquelle ils assurent le maintien de l'appareil dans le support, et une position de retrait, pour laquelle ils autorisent le retrait de l'appareil, à l'aide de moyens de commande tels que des vis ou des leviers.

Dans certaines réalisations, les moyens de commande des moyens de fixation agissent à partir d'une face latérale de l'appareil, pour qu'ils restent accessibles lorsque les appareils sont mis en place dans leur support, il est alors nécessaire de disposer lesdits appareils en saillie à l'avant dudit support.

Dans la réalisation proposée dans le WO 9838714, les moyens de fixation sont constitués par des languettes découpées dans certaines faces latérales de l'appareil et conformées de telle sorte que leur extrémité libre s'étende dans le plan de la face avant de l'appareil, à travers une fenêtre de celle-ci. Un outil est utilisé pour repousser la languette de sa position active pour laquelle elle est dans le plan de la paroi latérale. l'appareil étant fixé sur un support, vers une position de retrait pour laquelle l'appareil n'est plus fixé audit support

Dans d'autres réalisations, les moyens de fixation sont accessibles de l'avant après avoir procédé au démontage de platines de sécurité et/ou de décoration.

Un autre inconvénient des appareils connus tient au fait que les moyens de fixation qu'ils portent ne permettent de les fixer dans un support que dans une direction prédéfinie. Lorsque l'on désire les positionner dans un support disposé à angle droit par rapport à cette direction prédéfinie, la direction d'utilisation de la fonction portée par l'appareil se trouve alors basculée de 90° par rapport à la direction usuelle.

La présente invention propose une disposition simple et facile à mettre en oeuvre permettant de résoudre ces problèmes et dans laquelle on accède aux moyens de fixation à partir de la face avant de l'appareil et sans devoir démonter des éléments rapportés de finition ce qui permet d'encastrer ledit appareil dans son support et de fournir ainsi des installations facilement modifiables et à l'esthétique améliorée.

A cet effet, l'invention concerne un appareil électrique destiné à être mis en place dans un support, comportant une face avant munie d'une lumière pour l'introduction d'un outil de démontage, et des parois latérales, et portant au moins un moyen de fixation adapté à coopérer, dans une position active, avec un rebord dudit support pour assurer le maintien dudit appareil dans ce support, ledit moyen de fixation étant constitué par une languette élastique définie par une découpe dans une paroi latérale et comprenant une extrémité libre près de la face avant, ladite extrémité libre étant déplaçable de la position active dans le plan de la paroi vers une position de retrait, caractérisé en ce que la face inférieure de la face avant porte un bossage et en ce que la lumière est disposée au-dessus de la languette qu'elle surplombe, l'extrémité libre de la languette présentant un plan incliné tel que le mouvement d'introduction d'un outil induise l'écartement de l'extrémité libre de la languette de sa position active vers sa position de retrait dans laquelle elle est maintenue par immobilisation de l'extrémité de la languette derrière ledit bossage afin de dégager l'appareil du support.

L'appareil selon l'invention est encore remarquable en ce que :
- la lumière est rectangulaire et étroite,
- des moyens de fixation et des lumières permettant leur actionnement à l'aide d'un outil sont prévus sur les quatre côtés de l'appareil,
- il comporte une face avant et quatre-piliers d'angle composés chacun de deux parois latérales portant des languettes, lesdites parois latérales s'étendant respectivement sous deux côtés perpendiculaires entre eux de la face avant et étant disposées près d'un même angle de ladite face avant,
- chaque languette porte un bossage dépassant de sa face tournée vers l'extérieur de l'appareil, ledit bossage comportant une face supérieure perpendiculaire à la paroi de la languette et tournée vers l'extrémité libre de celle-ci, destinée à être en appui contre l'extrémité d'un rebord du support pour assurer le maintien de l'appareil dans le support lorsque la languette est en position active.

L'invention sera mieux comprise grâce à la description qui va suivre, donnée à titre d'exemple non limitatif en référence aux dessins annexés dans lesquels :
- la figure 1 est une vue de dessus en perspective d'un appareil suivant une première forme de réalisation de l'invention,
- la figure 2 est une vue analogue à la figure 1 pour un appareil suivant une seconde forme de réalisation de l'invention,
- la figure 3 est une vue de dessous en perspective de l'appareil de la figure 1,
- la figure 4 est une vue de côté de l'appareil de la figure 1,

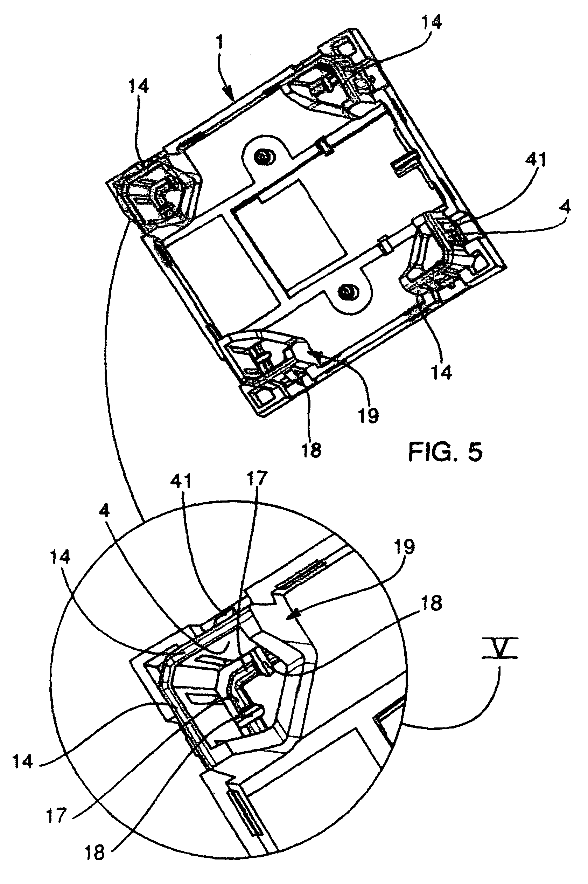

- la figure 5 est une vue en perspective montrant la face arrière de l'appareil de la figure 1, avec agrandissement du détail V,
- les figures 6a à 6c sont des demi-vues en coupe montrant trois phases de l'extraction hors d'un boîtier d'un appareil selon l'invention,
- les figures 7a à 7e montrent différentes utilisations d'un appareil.

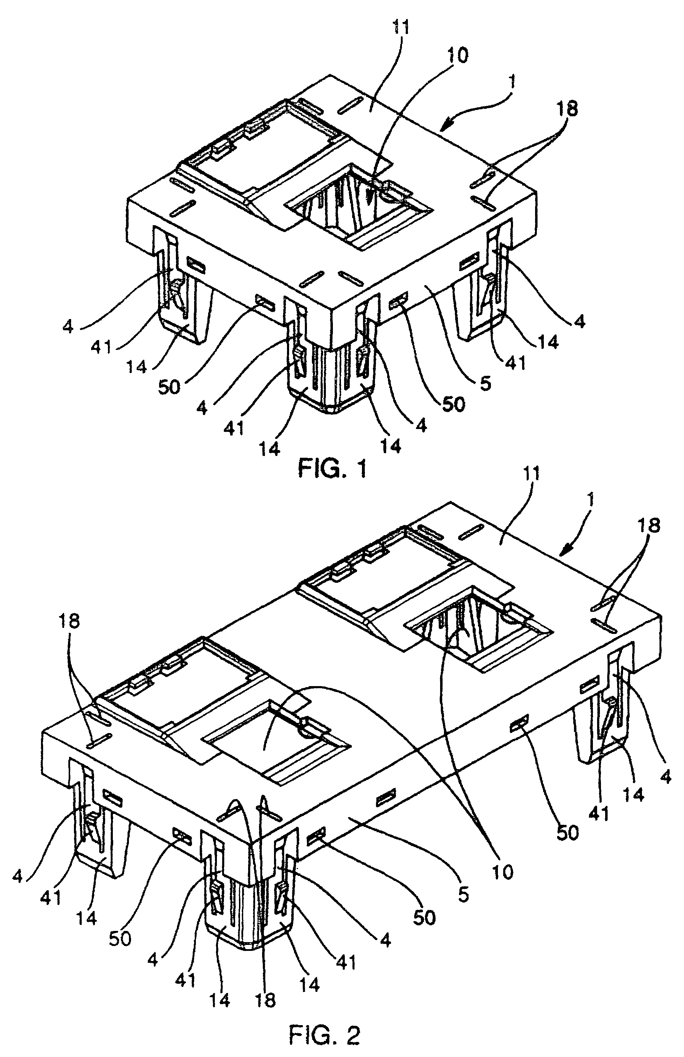

Dans l'exemple de réalisation représenté à la figure 1, l'appareil 1 porte un connecteur 10 sur sa face avant 11, ledit connecteur 10 pouvant être utilisé en téléphonie. De manière connue en soi et non représentée au dessin, la face avant 11 de l'appareil 1 peut porter tout autre type de connecteur ou d'élément fonctionnel tel que un (ou des) socles de prises de courant quelle que soit la norme à laquelle ils obéissent, un (ou des) interrupteur(s), un (ou des) voyant(s), un disjoncteur, etc..

A titre d'exemple, l'appareil 1 représenté à la figure 2 est un appareil dont la face avant 11 porte deux connecteurs 10.

De manière à ne pas surcharger le dessin, les appareils sont représentés de manière simplifiée, tous les éléments non indispensables à la compréhension de l'invention, tels que ceux concernant la circulation et la distribution du courant à l'élément fonctionnel ayant été omis.

Dans l'exemple de réalisation représenté au dessin, la face avant 11 présente une jupe périphérique 5 traversée par des ouvertures 50 destinées à permettre l'accrochage d'un boîtier non représenté renfermant les divers moyens de connexion du connecteur 10.

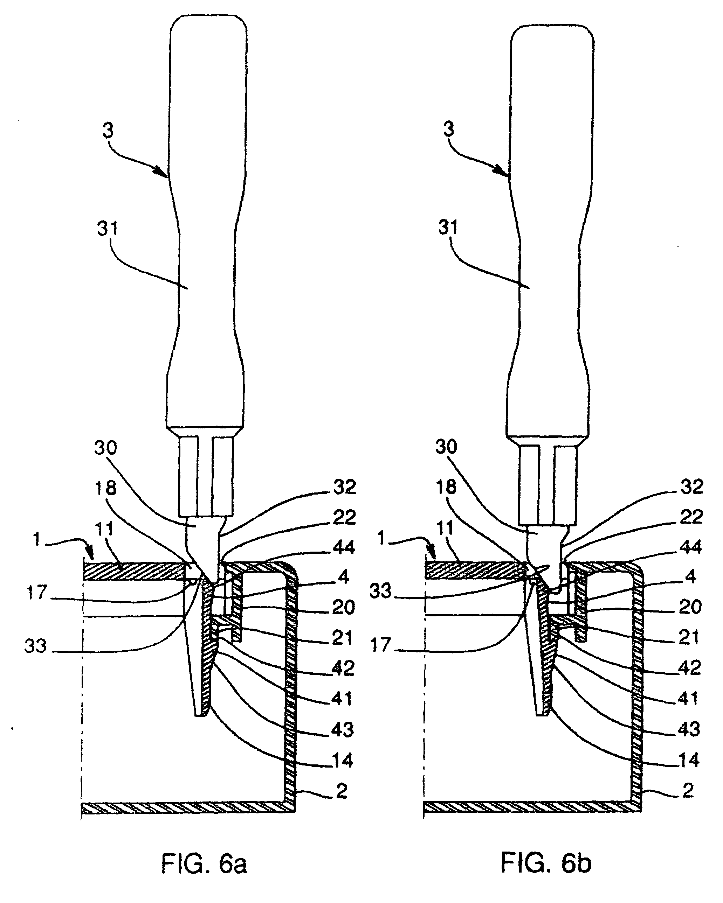

Ces appareils 1 sont destinés à être positionnés dans un support 2 tel que le rail 2 représenté à titre d'exemple aux figures 6a à 6c.

Ce rail 2 constituant le support pour la mise en place des appareils 1 présente sur sa face avant une ouverture longitudinale 22 de dimension transversale égale à la largeur de l'appareil 1. Cette ouverture longitudinale 22 est longée par une paroi 20 présentant un rebord 21 destiné à contribuer au maintien de l'appareil dans le support comme cela sera décrit plus loin.

Les appareils 1 portent des moyens de fixation 4 destinés à coopérer avec ledit rebord 21.

Comme visible au dessin, lesdits moyens de fixation 4 sont constitués par des languettes 4 découpées dans des parois latérales 14 de l'appareil 1 disposées perpendiculairement à la face avant 11 et près du bord de celle-ci ; lesdites parois latérales 14 peuvent constituer une sorte de pilier d'angle comme représenté au dessin, ou des parois fermant au moins partiellement l'espace se trouvant sous la face avant de l'appareil 1 afin de constituer un boîtier dans lequel sont disposés les éléments nécessaires à la circulation et à la distribution du courant.

Dans la forme de réalisation représentée au dessin, les parois latérales 14 sont positionnées près des angles de la face avant 11. Deux parois latérales 14 s'étendant respectivement sous deux côtés perpendiculaires entre eux de la face avant et disposées près d'un même angle de ladite face avant sont raccordées par une paroi 19. L'appareil 1 est ainsi composé d'une face avant 11 portant le connecteur 10 et de quatre piliers d'angle, ouverts, comportant chacun deux parois latérales 14 portant des languettes 4.

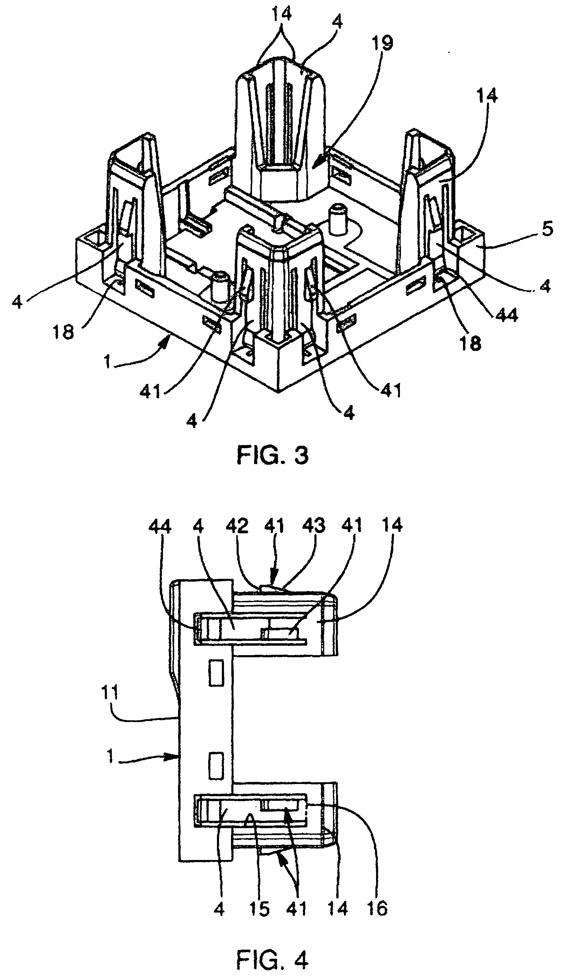

Les languettes 4 sont définies par des découpes 15 pratiquées dans les parois latérales 14. Le côté 16, représenté en trait fin à la figure 4, desdites découpes 15 qui est le plus éloigné de la face avant 11 n'est pas ouvert, il constitue le pied par lequel la languette 4 est raccordée à la paroi latérale 14. L'extrémité des languettes 4 qui est disposée près de la face avant 11 est libre.

Les appareils suivant l'invention sont réalisés en matière plastique, par exemple par moulage.

L'élasticité de la matière plastique utilisée confère aux languettes 4 découpées dans les parois latérales 14 une possibilité de déplacement en flexion par rapport à la paroi 14 autour d'un axe fictif constitué par le côté non ouvert 16 de la découpe 15. Les languettes 4 peuvent ainsi être repoussées vers l'intérieur de l'appareil et revenir élastiquement dans leur position initiale de repos pour laquelle elles s'étendent dans **le** plan de la paroi 14 dont elles sont issues. On définira ici l'espace interne de l'appareil comme étant l'espace disposé sous la face avant et à l'intérieur des faces latérales définies en raccordant fictivement les parois latérales 14.

Chaque languette 4 porte un bossage 41 dépassant de sa face tournée vers l'extérieur de l'appareil ; ledit bossage 41 est constitué d'une face supérieure 42 perpendiculaire à la paroi de la languette 4 et tournée vers l'extrémité libre de celle-ci, et d'une face 43 inclinée dirigée vers le pied de la languette.

Dans les exemples de réalisation représentés au dessin, chaque languette porte un bossage 41 d'épaisseur largement inférieure à la largeur de languette, d'autres formes de réalisation peuvent bien entendu être mises en oeuvre présentant un bossage large ou plusieurs bossages disposés parallèlement les uns aux autres sur la largeur de la languette.

Comme visible au dessin, et plus spécialement sur les figures 6a à 6c, l'extrémité libre, disposée près de la face avant 11, des languettes 4 présente un plan incliné 44, ledit plan incliné s'écartant de la paroi externe de la languette à mesure que l'on s'éloigne de la face avant 11 de l'appareil, chaque languette 14 est ainsi d'épaisseur faible près de son extrémité libre, son épaisseur augmentant lorsque l'on se déplace le long du plan incliné 44 en direction du pied.

Comme visible aux figures 6a à 6c, l'ouverture 22 du support 2 est de largeur égale à la largeur de la face avant 11 de l'appareil 1 tandis que les rebords 21 disposés le long de chaque bord de l'ouverture sont séparés d'une distance égale à la distance séparant les faces externes des parois latérales 14 de l'appareil 1.

Lorsqu'un appareil 1, ou un ensemble d'appareils raccordés les uns aux autres, doit être mis en place dans le support 2, il est introduit dans l'ouverture 22 suivant une direction perpendiculaire à celle-ci. Les parois latérales 14 glissent le long des rebords 21 tandis que les languettes 4 sont repoussées vers l'intérieur de l'appareil 1 lorsque les faces inclinées 43 des bossages 41 viennent au contact desdits rebords 21. A la fin du mouvement d'insertion de l'appareil 1 dans le support 2, les bossages 41 sont totalement disposés à l'arrière des rebords 21 et les languettes 4 reprennent élastiquement leur position de repos pour laquelle elles sont disposées dans le plan des parois latérales 14. Ce faisant, les faces supérieures 42 des bossages 41 sont en appui contre l'extrémité des rebords 21 et assurent le maintien de l'appareil 1 dans le support 2. La position de repos des languettes 4 est alors également leur position active pour laquelle elles assurent le maintien de l'appareil 1 dans le support 2.

Comme visible au dessin, la face avant 11 des appareils 1 est dans le plan de la face ouverte du support, lesdits appareils étant complètement encastrés dans ledit support.

Suivant l'invention, il est possible d'agir sur les languettes 4 à partir de la face avant 11 de l'appareil 1 pour retirer cet appareil 1 du support 2 sans devoir procéder auparavant au démontage d'autres éléments tels que des éléments de positionnement.

A cet effet, des lumières 18 sont formées dans ladite face avant 11 de l'appareil, au-dessus de chaque languette 4.

Chacune de ces lumières 18 est disposée transversalement par rapport au plan de la languette 4 qu'elle surplombe, donc parallèlement à la direction suivant laquelle la languette 4 peut se déplacer lors de sa flexion autour de l'axe fictif 16 formé par son pied.

Pour retirer une languette 4 de sa position de active, un outil de démontage 3 est introduit dans la lumière 18 disposée au-dessus de cette languette comme représenté aux figures 6a à 6c.

Cet outil est par exemple constitué d'un manche 31 et d'un embout 30 plat, d'épaisseur telle qu'il puisse pénétrer dans la lumière 18 de la face avant 11. En variante, un outil portant deux ou plusieurs embouts différents peut être prévu pour permettre le démontage d'appareils différents dont les moyens sont de dimensions et ou formes différentes.

Dans l'exemple de réalisation représenté au dessin, les lumières 18 sont des lumières rectangulaires très étroites afin de tenir compte des consignes de sécurité imposant que des corps étrangers ne puissent pas s'introduire dans l'appareil.

Dans l'exemple représenté au dessin, l'embout 30 est effilé, il présente un premier bord 32 parallèle au manche 31 et un second bord 33, oblique, formant un angle aigu avec le premier.

Comme représenté à la figure 6a, la lumière 18 est de dimension telle que la pointe de l'embout 30 de l'outil 3 peut être insérée entre le bord de la lumière 18 et la paroi externe de la languette 4, l'embout 30 étant disposé avec son premier bord 32 contre l'extrémité de la lumière 18 et son second bord 33, oblique, contre le plan incliné 44 de la languette 4.

Lors de l'insertion de l'outil 3, le bord oblique 33 de l'embout 30 glisse sur le plan incliné 44 de la languette 4 et agit sur celui-ci pour écarter ladite languette 4 en direction de sa position de retrait. Le mouvement de l'outil 3 induit un mouvement suivant une direction orthogonale de l'extrémité libre de la languette 4 tendant à écarter celle-ci de sa position active, en direction de sa position de retrait.

La figure 6b montre les positions de l'outil 3 et de la languette 4 au cours de ce mouvement.

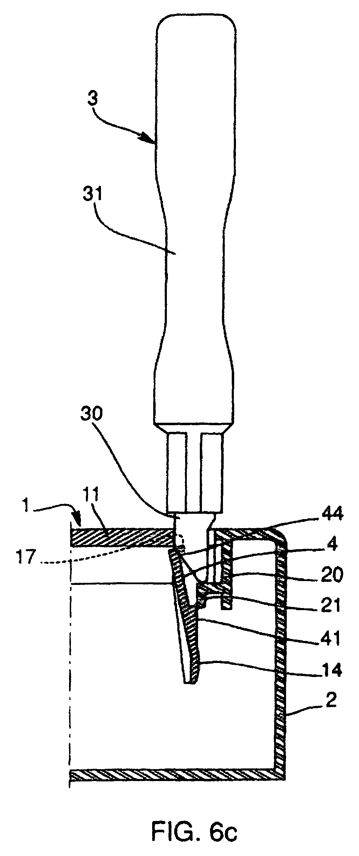

La figure 6c montre la position des différents éléments à la fin de l'insertion de l'outil 3.

La face inférieure de la face avant 11 de l'appareil porte un bossage 17 derrière lequel est amenée l'extrémité de la languette 4, c'est-à-dire le plan incliné 44, lorsque celle-ci est en position de retrait.

Le positionnement de l'extrémité de la languette 4 derrière le bossage 17 permet de l'immobiliser dans une position de retrait dans laquelle elle est maintenue à l'encontre de son élasticité inhérente à sa construction. Dans cette position, le bossage 41 est dégagé du rebord 21 du support 2 ce qui permet de retirer l'appareil ou l'ensemble constitué de plusieurs appareils dudit support.

Le bossage 17 est bien entendu interrompu au droit de la lumière 18, il est présent d'un côté et/ou de l'autre côté de ladite lumière.

Lorsque les appareils 1 doivent être à nouveau positionnés dans un support, il suffit de retirer les languettes vers l'extérieur de l'appareil afin de dégager le plan incliné 44 de celles-ci des bossages 17. Cette manipulation peut être faite à la main ou avec tout outil allongé, un tournevis ou l'outil de démontage 3.

Comme on a pu le constater à la lecture de la description qui précède, les manipulations nécessaires pour désassembler l'appareil du support se résument à l'introduction de l'outil 3 dans chaque lumière 18 des faces avant 11.

Ces manipulations sont rapides et simples à réaliser.

De manière avantageuse, ces manipulations se pratiquent uniquement à partir de la face avant des appareils 1. Il est alors possible de positionner ces appareils 1 avec leur face avant 11 dans le plan de l'ouverture 22 du support comme représenté au dessin. On obtient ainsi des montages plus esthétiques puisqu'ils ne présentent pas de saillies.

Il est possible d'utiliser les lumières 18 pour positionner par encliquetage des éléments de décoration ou de repérage qui seront ôtés lorsque les appareils doivent être sortis du support.

Suivant un autre aspect de l'invention, des languettes 4 et des lumières 18 permettant leur actionnement à l'aide d'un outil 3 sont prévues sur les quatre côtés de l'appareil 1. Cette disposition est particulièrement intéressante lorsque les appareils peuvent indifféremment être mis en place dans des supports 2 pouvant être des plinthes disposées horizontalement ou des poteaux disposés verticalement.

En effet, lorsque des moyens d'accrochage de l'appareil au support ne sont prévus que sur deux côtés dudit appareil comme cela est généralement le cas à l'heure actuelle, les connecteurs sont disposés à 90° par rapport à leur position normale lorsque l'appareil est mis en place dans un poteau.

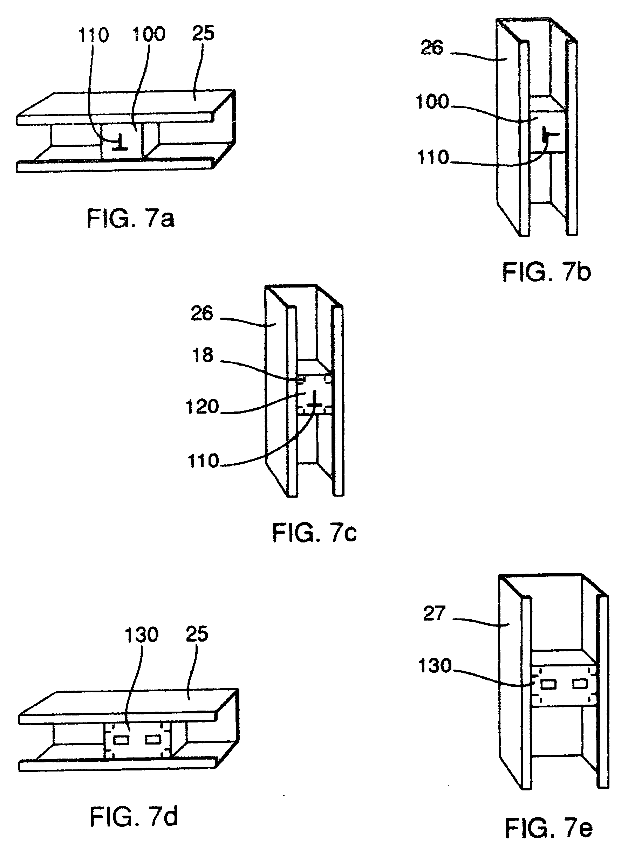

Ceci est illustré aux figures 7a et 7b.

La figure 7a représente schématiquement un appareil 100 portant un connecteur 110 tel qu'un conjoncteur téléphonique de norme française, mis en place dans un support 25 disposé horizontalement pour former une plinthe. On observe que le connecteur 110 se présente comme un T mis à l'envers, c'est-à-dire avec la petite barre en bas.

Dans les appareils connus, un tel appareil 110 présente des moyens d'accrochage le long de ses deux côtés disposés parallèlement à la petite barre du connecteur 110. De ce fait, lorsque l'appareil 100 est positionné dans un support 26 disposé verticalement pour former un poteau, comme représenté à la figure 7b, le connecteur 110 est positionné à angle droit par rapport à sa position usuelle connue de tous qui est celle de la figure 7a, pour positionner le connecteur dans la position usuelle connue il est nécessaire d'ajouter des éléments d'adaptation se fixant dans le support vertical pour constituer un support intermédiaire horizontal.

L'appareil 120 suivant l'invention qui porte des languettes 4 sur ses quatre côtés, peut être disposé comme représenté à la figure 7c avec le connecteur 110 dans sa position usuelle sans nécessiter l'utilisation d'éléments d'adaptation.

Lorsque l'appareil 130 présente des dimensions en largeur et longueur très différentes comme celui de la figure 2, il suffit d'adapter la largeur du support 27 pour pouvoir le positionner dans un support vertical comme cela est représenté aux figures 7d et 7e en conservant sa direction normale d'utilisation.

Comme on aura pu le comprendre, l'appareil selon l'invention est particulièrement intéressant d'une part parce qu'il permet une mise en place et une extraction facile d'un support, et, d'autre part parce qu'il peut être mis en place dans le support dans la direction adéquate en fonction du connecteur qu'il porte.

## Revendications

1. Appareil électrique destiné à être mis en place dans un support (2), comportant une face avant (11) munie d'une lumière (18) pour l'introduction d'un outil de démontage, et des parois latérales (14), et portant au moins un moyen de fixation (4) adapté à coopérer, dans une position active, avec un rebord (21) dudit support (2) pour assurer le maintien dudit appareil (1) dans ce support, ledit moyen de fixation (4) étant constitué par une languette (4) élastique définie par une découpe dans une paroi latérale et comprenant une extrémité libre près de la face avant, ladite extrémité libre étant déplaçable de la position active dans le plan de la paroi vers une position de retrait, **caractérisé en ce que** la face inférieure de la face avant (11) porte un bossage (17) et **en ce que** la lumière (18) est disposée au-dessus de l'extrémité libre de la languette qu'elle surplombe, l'extrémité libre de la languette (4) présentant un plan incliné (44) tel que le mouvement d'introduction d'un outil dans la lumière induise l'écartement de l'extrémité libre de la languette de sa position active vers sa position de retrait dans laquelle elle est maintenue par immobilisation de l'extrémité de la languette derrière ledit bossage (17) afin de dégager l'appareil du support.

2. Appareil selon la revendication 1, **caractérisé en ce que** la lumière (18) est rectangulaire et étroite.

3. Appareil selon l'une quelconque des revendications précédentes, **caractérisé en ce que** des moyens de fixation (4) et des lumières (18) permettant leur actionnement à l'aide d'un outil (3) sont prévus sur les quatre côtés de l'appareil (1).

4. Appareil selon l'une quelconque des revendications précédentes, **caractérisé en ce qu'**il comporte une face avant (11) et quatre piliers d'angle composés chacun de deux parois latérales (14) portant des languettes (4), lesdites parois latérales (14) s'étendant respectivement sous deux côtés perpendiculaires entre eux de la face avant (11) et étant disposées près d'un même angle de ladite face avant (11)

5. Appareil selon l'une quelconque des revendications précédentes, **caractérisé en ce que** chaque languette (4) porte un bossage (41) dépassant de sa face tournée vers l'extérieur de l'appareil, ledit bossage (41) comportant une face supérieure (42) perpendiculaire à la paroi de la languette (4) et tournée vers l'extrémité libre de celle-ci, destinée à être en appui contre l'extrémité d'un rebord (21) du support (2) pour assurer le maintien de l'appareil (1) dans le support (2) lorsque la languette (4) est en position active.

## Patentansprüche

1. Elektrische Vorrichtung zum Anbringen in einem Träger (2), die eine mit einem Schlitz (18) zum Einführen eines Demontagewerkzeuges versehene Vorderseite (11) und Seitenwände (14) aufweist und mindestens ein Befestigungsmittel (4) trägt, das dazu eingerichtet ist, in einer wirksamen Stellung mit einer Randleiste (21) des Trägers (2) zusammenzuwirken, um ein Haltern der Vorrichtung (1) in dem Träger zu gewährleisten, wobei das Befestigungsmittel (4) durch eine elastische Zunge (4) gebildet ist, die durch eine Ausstanzung in einer Seitenwand festgelegt ist und nahe der Vorderseite ein freies Ende umfaßt, das aus der wirksamen Stellung in der Ebene der Wand in eine zurückversetzte Stellung hin verbringbar ist, **dadurch gekennzeichnet, daß** die untere Fläche der Vorderseite (11) eine Wulst (17) aufweist und daß der Schlitz (18) oberhalb des freien Endes der Zunge angeordnet ist, über die er vorsteht, wobei das freie Ende der Zunge (4) eine schiefe Ebene (44) bildet, so daß die Einführungsbewegung eines Werkzeuges in den Schlitz das Verbringen des freien Endes der Zunge von dessen wirksamer Stellung zu dessen zurückversetzter Stellung hin bewirkt, in der es durch Fixieren des Endes der Zunge hinter der Wulst (17) gehalten wird, um die Vorrichtung vom Träger zu lösen.

2. Vorrichtung nach Anspruch 1, **dadurch gekennzeichnet, daß** der Schlitz (18) rechteckig und schmal ausgebildet ist.

3. Vorrichtung nach einem der vorhergehenden Ansprüche, **dadurch gekennzeichnet, daß** Befestigungsmittel (4) und Schlitze (18), die deren Betätigung mittels eines Werkzeuges (3) gestatten, an den vier Seiten der Vorrichtung (1) vorgesehen sind.

4. Vorrichtung nach einem der vorhergehenden Ansprüche, **dadurch gekennzeichnet, daß** sie eine Vorderseite (11) und vier Eckenlstützen umfaßt, deren jede aus zwei Seitenwänden (14) besteht, die Zungen (4) tragen, wobei sich die Seitenwände (14) jeweils unter zwei senkrecht zueinander verlaufenden Seiten der Vorderseite (11) erstrecken und nahe einer gleichen Ecke an der Vorderseite (11) angeordnet sind.

5. Vorrichtung nach einem der vorhergehenden Ansprüche, **dadurch gekennzeichnet, daß** jede Zunge (4) eine Buckel (41) aufweist, der über deren zur Außenseite der Vorrichtung gewandte Seite übersteht, wobei der Buckel (41) eine Oberseite (42) umfaßt, die senkrecht zur Wand der Zunge (4) verläuft, deren freiem Ende zugewandt und dazu bestimmt ist, gegen das Ende einer Randleiste (21) des Trägers (2) zur Anlage zu kommen, um ein Haltern der Vorrichtung (1) in dem Träger (2) sicherzustellen, wenn sich die Zunge (4) in ihrer wirksamen Stellung befindet.

## Claims

1. An electrical unit intended to be placed in a support (2), comprising a front face (11) provided with a port (18) for introducing a dismantling tool, and lateral walls (14), and having at least one fastening means (4) suitable to cooperate, in an active position, with a flange (21) of said support (2) to hold said unit (1) in this support, said fastening means (4) being formed of an elastic tongue (4) defined by a cutout in a lateral wall and comprising a free end close to the front face, said free end being displaceable from the active position in the plane of the wall towards a retracted position, **characterised in that** the lower face of the front face (11) bears a boss (17) and **in that** the port (18) is located above the free end of the tongue which it overhangs, the free end of the tongue (4) having a plane (44) inclined such that the introductory movement of a tool into the port causes the free end of the tongue to be moved away from its active position towards its retracted position in which it is held by immobilising the end of the tongue behind said boss (17) in order to disengage the unit from the support.

2. A unit according to Claim 1, **characterised in that** the port (18) is rectangular and narrow.

3. A unit according to any one of the preceding claims,-**characterised in that** fastening means (4) and ports (18) permitting actuation thereof by means of a tool (3) are provided on the four sides of the unit (1).

4. A unit according to any one of the preceding claims, **characterised in that** it comprises a front face (11) and four corner pillars each composed of two lateral walls (14) bearing tongues (4), said lateral walls (14) extending respectively beneath two sides of the front face (11) which are perpendicular to each other and being arranged close to the same corner of said front face (11).

5. A unit according to any one of the preceding claims, **characterised in that** each tongue (4) bears a boss (41) which projects from its face which is turned towards the outside of the unit, said boss (41) comprising an upper face (42) perpendicular to the wall of the tongue (4) and turned towards the free end thereof, which is intended to bear against the end of a flange (21) of the support (2) to hold the unit (1) in the support (2) when the tongue (4) is in the active position.
